# EUROPÄISCHE PATENTANMELDUNG

(11) **EP 0 786 439 A1**
(43) Veröffentlichungstag der Anmeldung: **30.07.1997**
(21) Anmeldenummer: 97101211.7
(22) Anmeldetag: 27.01.1997
(51) Int. Cl.: C04B 24/28, C04B 28/02, C04B 40/06

(54) **Polymermodifizierte Zement-Mörtel-Fertigmischung**

(30) Priorität: 27.01.1996 DE 19604097
(71) Anmelder: Colfirmit Rajasil GmbH, 95615 Marktredwitz (DE)
(72) Erfinder: Droll, Klaus, Dr., 95632 Wunsiedel (DE); Schuhmann, Hans, Dipl.-Math., 73098 Rechberghausen (DE); Meier, Hermann G., Dipl.-Ing. (FH), 95615 Marktredwitz (DE)
(74) Vertreter: Hansen, Bernd, Dr. Dipl.-Chem.

(57) **Zusammenfassung**

Die polymermodifizierte Zement-Mörtel-Fertigmischung bestehend aus 1 bis 50 Gew.-% eines Zements, 0,5 bis 15 Gew.-% eines Epoxidharzes, vorzugsweise vom Typ Bisphenol A oder F, 0,5 bis 15 Gew.-% eines alkalischen Epoxidharz-Härters auf Aminbasis, 1 bis 90 Gew.-% an gemahlenem Hüttensand als latenthydraulischer Komponente, und ggf. bis zu 90 Gew.-% an weiteren Bestandteilen wie Zuschläge (z. B. Kiese, Bruchsande), Füller, wie Feinmehle, Zusatzstoffe in Form von Flugaschen oder Silicastäuben und Zusatzmittel (Verflüssiger, Emulgatoren, Fließmittel usw.) besitzt den Vorteil, daß durch die Verwendung von latenthydraulischen Bindemitteln die Lagerstabilität und das Schwundverhalten von ein- bzw. zweikomponentigen ECC-Systemen deutlich verbessert werden. Die mit der Fertigmischung hergestellten Mörtel- und Betonprodukte besitzen gute chemische und mechanische Eigenschaften.

## Beschreibung

Gegenstand der vorliegenden Erfindung ist eine polymermodifizierte Zement-Mörtel-Fertigmischung.

Polymermodifizierte Zement-Mörtel und -Betone, insbesondere auf Epoxidharz-Zement-Basis, kurz ECC-Mörtel bzw. ECC-Betone, sind seit langem bekannt und werden in der Praxis erfolgreich u.a. als Beschichtungen und Estriche eingesetzt, da sie wesentlich zur Verbesserung der mechanischen und chemischen Eigenschaften zementgebundener Produkte beitragen.

Zum Erreichen dieser verbesserten Produkteigenschaften müssen die Mörtel- bzw. Beton-Komponenten exakt dosiert werden, da bei der Abbindung des mit Wasser angemachten Materials zwei unterschiedliche chemische Reaktionen, die Epoxidharz-Härter-Reaktion und die Zementhydratation, zwar zeitlich parallel, aber mit jeweils unterschiedlicher Dauer ablaufen. Die Ausgangsmischungen müssen deshalb ein genaues stöchiometrisches Verhältnis von Epoxidharz zu Epoxidharz-Härter aufweisen. Auf der anderen Seite kann die unterschiedlich stark ausgeprägte Temperaturabhängigkeit der parallel verlaufenden Reaktionen sowohl bei der Epoxidharz-Härtung als auch bei der Zementabbindung unter ungünstigen Temperaturen zu Problemen führen.

Ein weiterer verarbeitungsbedingter Nachteil besteht darin, daß diese polymermodifizierten Zementmassen erst am Verarbeitungsort, d. h. zumeist erst auf der Baustelle durch Vermengen der Ausgangskomponenten bereitet werden können.

Der Verarbeiter steht auf der Baustelle somit vor dem Problem, die Ausgangskomponenten vor Ort im stöchiometrischen Verhältnis auswiegen und/oder im vom Hersteller vorgegebenen Verhältnis definiert anmischen zu müssen, sowie üblicherweise das Anmachwasser in vorbestimmter Dosis hinzuzufügen, weshalb mangelhafte Bauausführungen durch falsche Dosierungen und/oder unzureichendes Durchmischen baustellenseits häufig nicht ausgeschlossen werden können.

Aber auch die Hersteller stehen Problemen bei der Bereitstellung der Einzelkomponenten gegenüber, die auf die unterschiedlichen Eigenschaften der Ausgangsmaterialien zurückzuführen sind und nur durch zum Teil sehr aufwendige und deshalb auch sehr umständliche Herstellungsverfahren einigermaßen zu umgehen sind.

So ist aus der DE-OS 33 08 622 ein Verfahren zur Herstellung einer lagerfähigen, einsatzbereiten Reaktionsharz-Härter-Zubereitung bekannt, die insbesondere für hydraulisch- und reaktionsharz-gebundene Baustoffe, wie z. B. Reaktionsharz-Beton oder Reaktions-Klebemörtel, geeignet sind und die aus einem Reaktionsharz und einem auf dieses Reaktionsharz abgestimmten Härter besteht, wobei das Reaktionsharz insbesondere ein Epoxidharz ist. Der Härter wird getrennt hiervon ggf. durch Erwärmen und/oder durch Zugabe eines Lösemittels auf eine Viskosität eingestellt, die eine Tröpfchenbildung ermöglicht. Auf die Oberfläche der Härtertröpfchen wird ein staubförmiges Material, insbesondere eine Kieselsäure, aufgebracht, wodurch die Härtertröpfchen umhüllt werden. Das getrennt gewonnene pulverförmige Harzmaterial und das nun pulverförmige Härtermaterial werden miteinander gemischt.

In der DE-OS 35 23 479 wird ein Verfahren zur Herstellung eines Baustoffgemisches beschrieben, das aus einem Reaktionsharz, insbesondere einem Epoxidharz, einem zugehörigen Härter, Zement sowie einem Zuschlag unterschiedlicher Korngröße und Wasser besteht und bei dem zunächst eine Gruppe einzelner Bestandteile, darunter der Zement und entweder das Harz oder der Härter, in einer Mischvorrichtung zu einem Vorgemisch A vermischt und dieses gelagert wird. Erst unmittelbar vor dem Einsatz werden die restlichen Bestandteile zugemischt und ein einsatzbereites Baustoffgemisch bereitet, wobei zur Herstellung eines lagerstabilen, trockenen Vorgemisches A die grobkörnigen Anteile zumindest einer Teilmenge des Zuschlags vorgelegt und mit dem flüssigen, wasserfreien Harz oder dem flüssigen, möglichst weitgehend wasserfreien Härter so vermischt werden, daß sich Tröpfchen oder Filme des Harzes bzw. des Härters auf den Oberflächen des grobkörnigen Zuschlages adhäsiv anlagern können. Anschließend werden die feinkörnigen Anteile des Zuschlages zugegeben, die die noch freien Flächen der Tröpfchen bzw. Filme abdecken, insbesondere abpudern. Abschließend wird dann der Zement zugegeben.

Gemäß der DE-OS 39 23 972 wird der eben geschilderte Mischungsvorgang umgekehrt. Erst werden Epoxidharz- und Härter-Vormischungen mit feinem, amorphem Zusatzstoff wie Silicastaub und/oder Flugasche erstellt. Die beiden flüssigen Epoxid-Komponenten werden eingepudert, dann die groben Zuschläge dazugegeben und schließlich beide Komponenten zusammengeführt. Nach beiden Verfahren sollen lagerstabile, rieselfähige ECC-Trockengemische entstehen.

Nachteilig wirken sich auch Probleme bei der Wasserdispergierung der beiden Polymer-Komponenten nach dem Anmachen des Trockenmörtels aus, resultierend aus den unterschiedlichen Hydrophilien dieser beiden Bestandteile. Die Zugabe von Emulgatoren zur Verbesserung der Emulgierung im Frischmörtel führt allerdings auch zu einer Erhöhung der Diffusionsvorgänge von Epoxidharz und -Härter im Trockenmörtel, bedingt durch die feine Zuschlag- und Zement-Abpuderungsschicht. Es kommt demzufolge zu Verklumpungen, wodurch die gerade noch vertretbare Lagerdauer erheblich eingeschränkt wird.

In der EP-A 0 387 480 wird eine Vorreaktion von Di- oder Polyaminen oder Polyaminoamiden, die als gebräuchliche Epoxidharz-Härter eingesetzt werden, mit Säuren, wie z.B. Oxalsäure oder Phosphorsäure, beschrieben, die mit Calcium schwerlösliche Salze bilden. Dadurch wird ein im trockenen Zustand gegen Epoxidharze inerter, latenter Epoxidharz-Härter gebildet. Epoxidharz, latenter Epoxidharz-Härter, Zement und Trockenmörtel-Bestandteile können dann in einem Arbeitsgang gemischt werden und ergeben lagerstabile Trockenmörtel-Mischungen. Beim Anrühren mit Wasser wird die Säurekomponente des Aminsalzes durch das alkalische, hydraulische Bindemittel neutralisiert und das freiwerdende Amin kann seine Wirkung als Epoxidharz-Härter entfalten.

Die Aminsalze der verwendeten Säuren üben jedoch nach Freisetzung des Säurerests einen schädlichen Einfluß auf den Zement aus, da dieser in seiner Aushärtung stark behindert wird. Gleichzeitig erhöht sich auch die Viskosität der Mischung, was wiederum mit einem gesteigerten Wasser-Zement-Wert kompensiert wird und woraus erhöhte Schwindneigungen und reduzierte Festigkeiten der Produkte resultieren.

Aus den beschriebenen Nachteilen des Standes der Technik hat sich daher die Aufgabe gestellt, eine Epoxidharz-vergütete und zementgebundene Trockenmörtelmischung in Form einer polymermodifizierten Zement-Mörtel-Fertigmischung zu schaffen, die eine baustellengerechte Verarbeitung, eine hohe Lagerstabilität und eine umgebungsunabhängige, gleichmäßige Ausbreitung der Mischung bei Beschichtungsanwendungen ermöglicht.

Die Lösung dieser Aufgabe gelang mit einer Fertigmischung, die aus 1 bis 50 Gew.-% eines Zementes, 0,5 bis 15 Gew.-% eines Epoxidharzes, 0,5 bis 15 Gew.-% eines alkalischen Epoxidharz-Härters und 1 bis 90 Gew.-% einer latenthydraulischen Komponente sowie ggf. bis zu 90 Gew.-% an weiteren Bestandteilen wie Zuschläge, Füller, Zusatzstoffe und/oder Zusatzmittel besteht

Überraschenderweise wurde gefunden, daß sich in dieser erfindungsgemäßen Fertigmischung eine latenthydraulische Komponente bestens bewährt. Bei der praktischen Anwendung zeigt sich außerdem, daß das stöchiometrische Mischungsverhältnis von Harz- und Härterkomponente, dessen strenge Beachtung bislang unabdingbar war, nun nicht mehr exakt eingehalten werden muß, was eine deutlich vereinfachte und schnellere Verarbeitung der Mischungen ermöglicht. Der Verarbeiter kann nun nämlich die für seine Zwecke notwendigen Konsistenzen der Mörtel- bzw. Betonmischungen auf der Baustelle in einfacher Weise einstellen, ohne dabei die Komponenten genau auswiegen zu müssen, was zusätzlichen Ausführungsmängeln vorbeugt. Darüber hinaus sind bei dieser Fertigmischung lagerungsbedingte Teilhärtungen oder Verklumpungen der Bindemittel ausgeschlossen.

Weiterhin konnte festgestellt werden, daß gegenüber herkömmlichen ECC-Systemen durch die Verwendung von latenthydraulischen Komponenten eine deutlich bessere Lagerstabilität erreicht werden konnte. Gleichzeitig weisen derartige Formulierungen ein günstigeres Schwundverhalten auf.

Die bevorzugte Zementkomponente wird erfindungsgemäß aus der Gruppe der Kompositzemente, Portlandzemente, Hochofenzemente und Tonerdezemente und deren Kombinationen ausgewählt, die auf herkömmliche Weise als hydraulische Bindemittel fungieren. Insgesamt sind aber alle Zemente geeignet, die den Anforderungen der DIN-Norm 1164 gerecht werden.

Als Epoxidharz wird vorzugsweise ein Epoxidharz vom Typ Bisphenol A oder F oder Kombinationen davon eingesetzt, das in einer bevorzugten Verfahrensvariante zur Regulierung der Benetzung und besseren Verteilung in den Granulaten bis zu 15 Gew.-% bezogen auf das Epoxidharz eines Epoxidharz-Reaktivverdünners, vorzugsweise vom Typ Kresyl-, 2-Ethylhexyl- oder eines C₁₂-C₁₄-Glycidylethers, enthält.

Die bessere Verteilung des Harzes bedingt ein gleichmäßigeres Durchhärten der angemachten Fertigmischung, wodurch qualitätsmindernde Fehlstellen im gehärteten Produkt vermieden werden.

Die Erfindung sieht weiterhin vor, den in wäßriger Lösung alkalisch reagierenden Epoxidharz-Härter bevorzugt aus der Gruppe der aliphatischen, cycloaliphatischen, heterocyclischen und aromatischen Amine, Diamine, Polyamine, Polyamidoamine und Polyetheramine oder Kombinationen davon auszuwählen, wobei sich in speziellen Anwendungsfällen aliphatische Di- und Polyamine der allgemeinen Formeln

H₂N(CH₂)ₙNH₂ wobei n = 2 bis 6

H₂N(CH₂)ₙNH(CH₂)ₙNH₂ wobei n = 1 bis 5

H₂N(CH₂)₂(NH)ₙ(CH₂)NH₂ wobei n = 2 bis 4

H₂N(CH₂)₂NH(CH₂)₂OH oder

CH₃(CH₂)ₙ(CH₂CH₂NH)ₘCH₂CH₂NH₂ wobei n = 1 bis 4 und m = 1 bis 5 ist

als überaus günstig erwiesen haben. Dabei können die alkalischen Epoxidharz-Härter, die vorzugsweise im Überschuß eingesetzt werden, vorteilhaft auch adduktiert oder als Emulsionen eingesetzt werden.

Gemäß vorliegender Erfindung eignen sich als latenthydraulische Komponente insbesondere Hochofenschlacken und/oder künstliche Schmelzen mit latenthydraulischen Eigenschaften, wobei gemahlener Hüttensand bevorzugt eingesetzt wird. Die Hochofenschlacken setzt man üblicherweise in granulierter Form ein, die man durch einfaches Abschrecken mit Wasser gewinnt. Hüttensande sind deshalb sehr gut für den vorliegenden Zweck geeignet, da sie im Gegensatz zu den auch üblichen Puzzolanen, also Kieselsäure oder kieselsäure- und tonerdehaltigen Stoffen, ohne selbständiges Bindevermögen (latent) eindeutig als hydraulische Bindemittel dienen können. Hüttensande nehmen unter den hydraulischen Stoffen deshalb eine Art Sonderstellung ein, da sie hinsichtlich ihres Chemismus und der Hydraulizität den Zementen zwar sehr nahe stehen, aber nicht alleine, sondern erst im Zusammenwirken mit diesen, aber auch mit Kalken oder Gips, ihre hydraulischen Eigenschaften entfalten. Dies geschieht also im völligen Gegensatz zu den Puzzolanen, die auch ohne Zementkomponente und auch ohne Wasser nur mit Kalk erhärten, wovon man insbesondere in Traßkalk-Mörteln Gebrauch macht.

Wie schon angesprochen, kann die erfindungsgemäße Fertigmischung neben den Hauptbestandteilen Zement, Epoxidharz, alkalischer Epoxidharz-Härter und latenthydraulische Komponente noch weitere Bestandteile aufweisen, wobei vorzugsweise bis zu 90 Gew.-% an quarzitischen oder carbonatischen Sanden, Kiesen oder Brechsanden als Zuschläge und bis zu 50 Gew.-% an inerten Feinmehlen als Füller zugesetzt werden, wofür sich vorzugsweise Kalksteinmehl, Quarzmehl und hochdisperse Kieselsäure als besonders geeignet erwiesen haben.

Puzzolanisch reagierende Feinmehle, wie die bevorzugt eingesetzten Flugaschen, Traßmehle oder Silicastäube werden als erfindungsgemäße Zusatzstoffe in Mengen bis zu 50 Gew.-% der Fertigmischung zugegeben.

Bevorzugte Anteile von bis zu 5 Gew.-% an Zusatzmitteln machen die erfindungsgemäße polymermodifizierte Zement-Mörtel-Fertigmischung für zahlreiche, auch sehr spezielle Anwendungen der Mörtel- und Betonverarbeitung geeignet. Verflüssiger, Emulgatoren, Fließmittel, Luftporenbildner, Wasserretentionsmittel, Hydrophobierungsmittel, Stellmittel, Beschleuniger und/oder Verzögerer werden vorzugsweise als derartige Zusatzmittel eingesetzt, doch können in Abhängigkeit von jeder anderen Spezialanwendung auch andere Zusatzmittel gewählt werden. Neben den eben genannten sind auch alle anderen in der Mörtel- und Betontechnologie bekannten weiteren Bestandteile denkbar.

Die erfindungsgemäße Zement-Mörtel-Fertigmischung läßt sich problemlos und mit geringem technischen Aufwand herstellen: Dazu wird eine Mischungskomponente I, bestehend aus Zement, Epoxidharz, der latenthydraulischen Komponente und ggf. den bereits genannten weiteren Bestandteilen und eine Mischungskomponente II, bestehend aus dem alkalischen Epoxidharz-Härter und ggf. weiteren Bestandteilen im Volumenverhältnis von 1:0,1 bis 10 trocken gemischt.

Durch die Auswahl der weiteren Bestandteile können zwar die Mischungsverhältnisse in einem breiten Spektrum variiert werden. Doch hat sich für die baustellengerechte Anwendung das Volumenverhältnis von 1:1 als besonders zweckdienlich erwiesen. Die Abmischung der beiden Mischungskomponenten I und II kann selbstverständlich sowohl werksseitig als auch erst auf der Baustelle erfolgen. Bei werksseitiger Abmischung können die Komponenten einkomponentig oder aber in überschichteter Form gemeinsam in einem Gebinde gelagert werden.

Das Durchmischen erfolgt mit Hilfe der üblichen Geräte und führt zu einer homogenen Fertigmischung, die ohne Entmischung über einen längeren Zeitraum gut lagerfähig ist, ohne daß es zu vorzeitigen Aushärtungeerscheinungen und Verklumpungen kommt.

Die nach dem eben beschriebenen, einfachen Verfahren bereitete erfindungsgemäße Fertigmischung wird bevorzugt unter Einsatz von Anmachwasser zur Herstellung von polymermodifizierten Zement-Mörteln und -Betonen verwendet, die ausgezeichnet verarbeitbar sind und deren ausgehärtete Produkte sehr gute chemische und mechanische Eigenschaften aufweisen.

Die nachfolgenden Beispiele veranschaulichen die Vorteile der erfindungsgemäßen Fertigmischung, die sich besonders gut für die Verarbeitung in Estrich-, Mauer-, Putz- und Reparaturmörteln eignet.

### Beispiel 1

### Fugemörtel-Fertigmischung

| Komponenten 1: | |
|---|---|
| Portlandzement CEM 152.5R | 10,0 Gew.-% |
| gemahlener Hüttensand (Blainewert: 4000 cm2/g) | 30,0 Gew.-% |
| Feuergetrockneter Quarzsand 0/1 mm | 55,6 Gew.-% |
| Zusatzmittel (Wasserretentionsmittel: Methylcellulose) | 0,4 Gew.-% |
| Epoxidharz (Beckopox EP 128) | 4,0 Gew.-% |

| Komponenten 2: | |
|---|---|
| Traßmehl (Blainewert: 6500 cm2/g) | 10,0 Gew.-% |
| Feuergetrockneter Quarzsand 0/1 mm | 86,4 Gew.-% |
| Hochdisperse Kieselsäure (Wacker HDK N20) | 0,6 Gew.-% |
| Amin-Epoxid-Härter (Beckopox EH606) | 3,0 Gew.-% |

Die Komponenten wurden im Volumenverhältnis 1:1 gemischt. Wasseranspruch: 185 g / 1000 g Fertigmischung

| Festigkeitsentwicklung: | | | | | |
|---|---|---|---|---|---|
| | | ***2 Tage*** | ***7 Tage*** | ***28 Tage*** | ***90 Tage*** |
| **Druckfestigkeit** | N/mm² | 2,5 | 6,8 | 8,8 | 11,0 |
| **Biegezugfestigkeit** | N/mm² | 1,1 | 1,6 | 2,0 | 2,4 |

### Beispiel 2

### Fertigmischung für eine Fußboden-Dickbeschichtung

| Komponenten 1: | |
|---|---|
| Portlandzement CEM 152.5R | 30,0 Gew.-% |
| gemahlener Hüttensand (Blainewert: 4000 cm2/g) | 20,0 Gew.-% |
| Feuergetrockneter Quarzsand 0/8 mm | 41,0 Gew.-% |
| Epoxidharz (Rütapox 0169) | 8,0 Gew.-% |
| Zusatzmittel (Verflüssiger: Melment F10) | 1,0 Gew.-% |

| Komponenten 2: | |
|---|---|
| Flugasche (Safament) | 16,0 Gew.-% |
| Feuergetrockneter Quarzkies 0/8 mm | 62,6 Gew.-% |
| Hartstoff 2 - 5 mm (Korund) | 15,0 Gew.-% |
| Zusatzmittel (Wasserretentionsmittel: Methylcellulose) | 0,4 Gew.-% |
| Amin-Epoxid-Härter (Rütapox H550) | 6,0 Gew.-% |

Die Komponenten wurden im Volumenverhältnis 1,2:1 gemischt. Wasseranspruch: 170 g / 1000 g Fertigmischung

| Festigkeitsentwicklung: | | | | |
|---|---|---|---|---|
| | | ***2 Tage*** | ***7 Tage*** | ***28 Tage*** |
| **Druckfestigkeit** | N/mm² | 9,3 | 31,4 | 41,2 |
| **Biegezugfestigkeit** | N/mm² | 2,5 | 5,3 | 7,6 |

## Patentansprüche

1. Polymermodifizierte Zement-Mörtel-Fertigmischung, dadurch gekennzeichnet, daß sie aus 1 bis 50 Gew.-% eines Zementes, 0,5 bis 15 Gew.-% eines Epoxidharzes, 0,5 bis 15 Gew.-% eines alkalischen Epoxidharz-Härters und 1 bis 90 Gew.-% einer latenthydraulischen Komponente sowie ggf. bis zu 90 Gew.-% an weiteren Bestandteilen wie Zuschläge, Füller, Zusatzstoffe und/oder Zusatzmittel besteht.

2. Fertigmischung nach Anspruch 1, dadurch gekennzeichnet, daß die Zementkomponente ausgewählt ist aus der Gruppe der Kompositzemente, Portlandzemente, Hochofenzemente, Tonerdezemente und deren Kombinationen.

3. Fertigmischung nach den Ansprüchen 1 und 2, dadurch gekennzeichnet, daß sie ein Epoxidharz vom Typ Bisphenol A und/oder F enthält.

4. Fertigmischung nach Anspruch 3, dadurch gekennzeichnet, daß sie bis zu 15 Gew.-% bezogen auf das Epoxidharz eines Epoxidharz-Reaktivverdünners enthält.

5. Fertigmischung nach Anspruch 4, dadurch gekennzeichnet, daß der Epoxidharz-Reaktivverdünner vom Typ Kresyl-, 2-Ethylhexyl- oder C₁₂ - C₁₄-Glycidylether ist.

6. Fertigmischung nach den Ansprüchen 1 bis 5, dadurch gekennzeichnet, daß der alkalische Epoxidharz-Härter ausgewählt ist aus der Gruppe der aliphatischen, cycloaliphatischen, heterocyclischen und aromatischen Amine, Diamine, Polyamine, Polyamidoamine und Polyetheramine und Kombinationen davon.

7. Fertigmischung nach den Ansprüchen 1 bis 6, dadurch gekennzeichnet, daß der Epoxidharz-Härter im Überschuß enthalten ist.

8. Fertigmischung nach den Ansprüchen 1 bis 7, dadurch gekennzeichnet, daß die latenthydraulische Komponente aus Hochofenschlacken und/oder künstlichen Schmelzen mit latenthydraulischen Eigenschaften besteht.

9. Fertigmischung nach den Anspruch 8, dadurch gekennzeichnet, daß die latenthydraulische Komponente aus gemahlenem Hüttensand besteht.

10. Fertigmischung nach den Ansprüchen 1 bis 9, dadurch gekennzeichnet, daß sie als Zuschläge bis zu 90 Gew.-% an quarzitischen oder carbonatischen Sanden, Kiesen oder Brechsanden enthält.

11. Fertigmischung nach den Ansprüchen 1 bis 10, dadurch gekennzeichnet, daß sie als Füller bis zu 50 Gew.-% an inerten Feinmehlen enthält.

12. Fertigmischung nach den Anspruch 11, dadurch gekennzeichnet, daß sie als Füller Kalksteinmehl, Quarzmehl oder hochdisperse Kieselsäure enthält.

13. Fertigmischung nach den Ansprüchen 1 bis 12, dadurch gekennzeichnet, daß sie als Zusatzstoffe bis zu 50 Gew.-% an puzzolanisch reagierenden Feinmehlen enthält.

14. Fertigmischung nach den Anspruch 13, dadurch gekennzeichnet, daß sie als puzzolanisch reagierende Feinmehle Flugaschen, Traßmehle oder Silica-Stäube enthält.

15. Fertigmischung nach den Ansprüchen 1 bis 14, dadurch gekennzeichnet, daß sie als Zusatzmittel bis zu 5 Gew.-% an Verflüssiger, Emulgatoren, Fließmittel, Luftporenbildner, Wasserretentionsmittel, Hydrophobierungsmittel, Stellmittel, Beschleuniger und/oder Verzögerer enthält.

16. Verfahren zur Herstellung der Fertigmischung nach den Ansprüchen 1 bis 15, dadurch gekennzeichnet, daß eine Mischungskomponente I, bestehend aus Zement, Epoxidharz, der latenthydraulischen Komponente und ggf. weiteren Bestandteilen, und eine Mischungskomponente II, bestehend aus dem alkalischen Epoxidharz-Härter und ggf. weiteren Bestandteilen, im Volumenverhältnis von 1:0,1 bis 10, bevorzugt 1:1, trocken gemischt werden.

17. Verwendung der Fertigmischung nach den Ansprüchen 1 bis 12 zur Herstellung von polymermodifizierten Zement-Mörteln und -Betonen unter Einsatz von Anmachwasser.
